# EUROPÄISCHE PATENTANMELDUNG

(11) **EP 3 404 252 A1**
(43) Veröffentlichungstag der Anmeldung: **21.11.2018**
(21) Anmeldenummer: 18168687.4
(22) Anmeldetag: 23.04.2018
(51) Int. Cl.: F02N 19/00, F02D 41/06, F02D 41/00, F01L 1/047, F02D 13/02, F01L 13/08, F01L 13/06, F02D 13/04, F01L 13/00

(54) **VERFAHREN UND VORRICHTUNG ZUM STARTEN EINES MIT EINEM SCHIEBENOCKENSYSTEM AUSGESTATTETEN VERBRENNUNGSMOTORS**

(30) Priorität: 18.05.2017 DE 102017004817
(71) Anmelder: MAN Truck & Bus AG, 80995 München (DE)
(72) Erfinder: Hirschmann, Steffen, 91413 Neustadt an der Aisch (DE); Malischewski, Thomas, 91560 Heilsbronn (DE); Hyna, Dominic, 90763 Fürth (DE); Dressel, Tim, 90475 Nürnberg (DE)
(74) Vertreter: v. Bezold & Partner Patentanwälte - PartG mbB

(57) **Zusammenfassung**

Die Erfindung betrifft ein Verfahren zum Starten eines Verbrennungsmotors. Das Verfahren weist das Initiieren eines Startvorgangs auf. Das Verfahren weist das Antreiben des Verbrennungsmotors durch einen Anlasser des Verbrennungsmotors zur Erhöhung einer Motordrehzahl während des Startvorgangs auf. Das Verfahren weist das Betätigen eines ersten Auslassventils (20) des Verbrennungsmotors in einem Motorbremsbetrieb oder Motorstartbetrieb während eines ersten Abschnitts (S1) des Startvorgangs, in dem das erste Auslassventil (20) im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird, auf. Alternativ oder zusätzlich weist das Verfahren das Umschalten einer Betätigung eines ersten Auslassventils (20) des Verbrennungsmotors mittels eines Schiebenockensystems (11) zwischen einem ersten Abschnitt (S1) des Startvorgangs und einem zweiten Abschnitt (S2) des Startvorgangs, der insbesondere zeitlich nach dem ersten Abschnitt (S1) liegt, auf.

## Beschreibung

Die Erfindung betrifft ein Verfahren zum Starten eines Verbrennungsmotors und einen variablen Ventiltrieb hierfür.

Zum Starten eines Verbrennungsmotors kann ein Anlasser eine Drehzahl des Verbrennungsmotors auf eine Zünddrehzahl erhöhen. Ab der Zünddrehzahl kann ein zündfähiges Gemisch in den Verbrennungskammern des Verbrennungsmotors gezündet werden. Der Anlasser kann dann ausspuren, da dann die erzeugte Leistung des Verbrennungsmotors ausreicht, um den Verbrennungsmotor selbst am Laufen zu halten. Anlasser können beispielsweise elektrisch, pneumatisch oder hydraulisch betrieben werden.

Abhängig von den Umgebungsbedingungen (z. B. Temperatur, Höhenlage, Luftfeuchte) kann sich der Startvorgang aufgrund unterschiedlicher "Gegenkräfte" (Reibung, Verdichtung usw.) sehr unterschiedlich gestalten. Dies kann soweit führen, dass zum Beispiel aufgrund der Bedingungen und in Abhängigkeit von der Starterbatteriekapazität ein Motorstart nicht mehr oder nur sehr schwer möglich ist.

Zur Unterstützung des Anlassers können verschiedene Hilfsaggregate vorgesehen sein.

Die WO 2014/100185 A1 offenbart ein Motorventilbetätigungssystem und -verfahren, die zum Dekomprimieren eines Motorzylinders während des Anlassens des Motors verwendet werden. Das System kann einen Kipphebel umfassen, der schwenkbar an einer Kipphebelwelle angebracht ist. Das System kann zudem eine Struktur, die angrenzend an den Kipphebel in einer festen Position relativ zu dem Kipphebel angebracht ist, aufweisen. Ein Verriegelungskolben kann gleitend zwischen dem Kipphebel und der Struktur angeordnet sein. Der Verriegelungskolben kann selektiv ausgefahren werden, um sowohl den Kipphebel als auch die Struktur in Eingriff zu bringen, um die Schwenkbewegung des Kipphebels zu begrenzen und die Motorventile in einem offenen Zustand zu halten.

Es ist ferner bekannt, ein eigens dafür vorgesehenes Dekompressionsventil zu verwenden, das während des Anlassens zum Entlüften des Zylinders geöffnet wird.

Der Erfindung liegt die Aufgabe zu Grunde, ein alternatives und/oder verbessertes Verfahren und eine entsprechende Vorrichtung zum Verkürzen eines Startvorgangs eines Verbrennungsmotors bereitzustellen.

Die Aufgabe wird gelöst durch ein Verfahren und einen variablen Ventiltrieb gemäß den unabhängigen Ansprüchen. Vorteilhafte Weiterbildungen sind in den abhängigen Ansprüchen und der Beschreibung angegeben.

Das Verfahren zum Starten eines Verbrennungsmotors weist das Initiieren eines Startvorgangs auf. Das Verfahren weist das Antreiben des Verbrennungsmotors durch einen Anlasser des Verbrennungsmotors zur Erhöhung einer Motordrehzahl während des Startvorgangs auf. Das Verfahren weist das Betätigen eines ersten Auslassventils des Verbrennungsmotors in einem Motorbremsbetrieb oder Motorstartbetrieb während eines ersten Abschnitts des Startvorgangs, in dem das erste Auslassventil im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird, auf. Alternativ oder zusätzlich weist das Verfahren das Umschalten einer Betätigung eines ersten Auslassventils des Verbrennungsmotors mittels eines Schiebenockensystems zwischen einem ersten Abschnitt des Startvorgangs und einem zweiten Abschnitt des Startvorgangs, der insbesondere zeitlich nach dem ersten Abschnitt liegt, auf.

Im ersten Abschnitt des Startvorgangs kann der Anlasser die Drehzahl des Verbrennungsmotors im Motorbremsbetrieb schnell erhöhen, da der Verdichtungsenddruck im Verdichtungstakt aufgrund der Öffnung des ersten Auslassventils kleiner wird. Zudem kann die Energieaufnahme des Anlassers sinken. Somit kann auf vorteilhafte Weise der Motorbremsbetrieb sowohl zum Verringern einer Motordrehzahl, wenn der Verbrennungsmotor bereits läuft, als auch zum Verkürzen eines Startvorgangs des Verbrennungsmotors, wenn der Verbrennungsmotor noch nicht selbst läuft, verwendet werden. Da der Motorbremsbetrieb während des Startvorgangs nicht zum Bremsen des Verbrennungsmotors (Verringern einer Drehzahl des Verbrennungsmotors) verwendet wird, sondern zum Verkürzen des Startvorgangs durch Ermöglichen einer schnellen Drehzahlerhöhung, kann der Motorbremsbetrieb hier auch als Motorstartbetrieb bezeichnet werden.

Die Verwendung des Schiebenockensystems zum Vorsehen verschiedener Ventilsteuerkurven für das erste Auslassventil während des ersten und zweiten Abschnitts des Startvorgangs ermöglicht eine schnelle und zuverlässige Schaltung. Die jeweiligen Ventilsteuerkurven können den Anforderungen im ersten Abschnitt und im zweiten Abschnitt des Startvorgangs angepasst werden. So kann im ersten Abschnitt eine Ventilsteuerkurve gewählt werden, die eine schnelle Erhöhung der Motordrehzahl erlaubt, zum Beispiel Öffnen oder Offenhalten im Verdichtungstakt und im Ausschubtakt. Durch die Verwendung des Schiebenockensystems besteht ferner die Möglichkeit, weitere Funktionalitäten zum Verändern der Ventilsteuerkurven für verschiedene Betriebe funktionsintegriert in dem Schiebenockensystem darzustellen.

In einer bevorzugten Ausführungsform wird im ersten Abschnitt des Startvorgangs das erste Auslassventil zum Öffnen oder Offenhalten im Verdichtungstakt und im Ausschubtakt betätigt. Alternativ oder zusätzlich wird in einem zweiten Abschnitt des Startvorgangs das erste Auslassventil zum Öffnen im Ausschubtakt betätigt.

In einer weiteren Ausführungsform weist das Schiebenockensystem einen ersten Nocken für einen Normalbetrieb und einen zweiten Abschnitt des Startvorgangs des Verbrennungsmotors und einen zweiten Nocken für den ersten Abschnitt des Startvorgangs auf. Das Schiebenockensystem setzt wahlweise den ersten Nocken und ein erstes Auslassventil des Verbrennungsmotors in Wirkverbindung oder den zweiten Nocken und das erste Auslassventil in Wirkverbindung. Das erste Auslassventil wird mittels des zweiten Nockens während des ersten Abschnitts des Startvorgangs betätigt. Alternativ oder zusätzlich wird von dem zweiten Nocken auf den ersten Nocken durch das Schiebenockensystem umgeschaltet. Alternativ oder zusätzlich wird das erste Auslassventil mit dem ersten Nocken während des zweiten Abschnitts des Startvorgangs betätigt.

Vorzugsweise weist das Schiebenockensystem einen auf einer Nockenwelle des Verbrennungsmotors drehfest und axial verschiebbar angeordneten Nockenträger mit dem ersten Nocken und den in einer Längsrichtung der Nockenwelle versetzt angeordneten zweiten Nocken auf.

In einer Ausführungsform wird das Umschalten der Betätigung des ersten Auslassventils und/oder das Umschalten von dem zweiten Nocken auf den ersten Nocken nach einer vorbestimmten Zeitdauer, bei Erreichen einer vorbestimmten Drehzahl des Verbrennungsmotors und/oder bei Erreichen eines vorbestimmten Drehmoments des Verbrennungsmotors durchgeführt. Damit stehen zuverlässige Umschaltbedingungen für das Umschalten zum zweiten Abschnitt des Startvorgangs zur Verfügung.

Insbesondere kann in einem Bereich von bis zu rund 1/5 einer Leerlaufdrehzahl des Verbrennungsmotors, vorzugsweise bei rund 1/5 der Leerlaufdrehzahl, umgeschaltet werden. In anderen Worten, der erste Abschnitt kann sich insbesondere bis zu rund 1/5 der Leerlaufdrehzahl des Verbrennungsmotors erstrecken.

In einer vorteilhaften Weiterbildung ist der zweite Nocken so ausgebildet ist, dass das erste Auslassventil zwischen 100° KW (Kurbelwinkel) und 60° KW vor dem Erreichen des oberen Totpunkts öffnet, das erste Auslassventil nach dem Öffnen im Ausschubtakt im Bereich zwischen dem oberem Totpunkt und 30° KW nach dem oberen Totpunkt schließt, und/oder das erste Auslassventil nach dem Öffnen im Verdichtungstakt im Bereich zwischen dem unteren Totpunkt und 30° KW nach dem unteren Totpunkt schließt. Damit kann einerseits eine gute Motorbremsfunktionalität und andererseits eine erhebliche Verkürzung des Startvorgangs ermöglicht werden.

In einem Ausführungsbeispiel weist das Verfahren ferner das Erfassen einer Außentemperatur und/oder einer Motortemperatur des Verbrennungsmotors auf. Der Schritt des Betätigen des ersten Auslassventils in dem Motorbremsbetrieb und/oder der Schritt des Umschaltens der Betätigung des ersten Auslassventils mittels des Schiebenockensystems wird durchgeführt, wenn die erfasste Außentemperatur kleiner oder gleich einer vorbestimmten Außenschwellwerttemperatur ist und/oder die erfasste Motortemperatur kleiner oder gleich einer vorbestimmten Motorschwellwerttemperatur ist. Dies hat den Vorteil, dass insbesondere bei schwierigen Startbedingungen in Kaltlandanwendungen o. ä. ein Startvorgang des Verbrennungsmotors verkürzt werden kann.

In einem weiteren Ausführungsbeispiel weist das Verfahren ferner das Erfassen einer Außentemperatur und/oder einer Motortemperatur des Verbrennungsmotors auf. Der Schritt des Betätigens des ersten Auslassventils mittels des zweiten Nockens während des ersten Abschnitts und/oder der Schritt des Umschaltens von dem zweiten Nocken auf den ersten Nocken werden durch das Schiebenockensystem durchgeführt, wenn die erfasste Außentemperatur kleiner oder gleich einer vorbestimmten Außenschwellwerttemperatur ist und/oder die erfasste Motortemperatur kleiner oder gleich einer vorbestimmten Motorschwellwerttemperatur ist. Dies hat ebenso den Vorteil, dass insbesondere bei schwierigen Startbedingungen in Kaltlandanwendungen o.ä. ein Startvorgang des Verbrennungsmotors verkürzt werden kann.

In einem Ausführungsbeispiel weist das Verfahren ferner das Betätigen des ersten Auslassventils während des ersten Abschnitts des Startvorgangs wie im zweiten Abschnitt des Startvorgangs, wenn die erfasste Außentemperatur größer als die Außenschwellwerttemperatur und/oder die erfasste Motortemperatur größer als die Motorschwellwerttemperatur ist, auf. Folglich kann bei günstigen Startbedingungen auf eine Unterstützung durch das Umschalten auf eine andere Ventilsteuerkurve verzichtet und damit ein Verschleiß am Umschaltsystem verringert werden.

In einem weiteren Ausführungsbeispiel weist das Verfahren ferner das Betätigen des ersten Auslassventils mittels des ersten Nockens während des ersten Abschnitts des Startvorgangs, wenn die erfasste Außentemperatur größer als die Außenschwellwerttemperatur und/oder die erfasste Motortemperatur größer als die Motorschwellwerttemperatur ist, auf. Folglich kann ebenso bei günstigen Startbedingungen auf eine Unterstützung durch das Schiebenockensystem verzichtet und damit ein Verschleiß am Schiebenockensystem verringert werden.

In einer Ausführungsvariante weist das Verfahren ferner das Zünden eines zündfähigen Gemischs in einer dem ersten Auslassventil zugeordneten Verbrennungskammer des Verbrennungsmotors während des zweiten Abschnitts des Startvorgangs.

Insbesondere kann in einem Bereich von rund 1/6 der Leerlaufdrehzahl des Verbrennungsmotors gezündet werden.

In einer weiteren Ausführungsvariante weist das Verfahren das Umschalten von dem ersten Nocken auf den zweiten Nocken vor dem ersten Abschnitt des Startvorgangs, insbesondere während eines Abschaltens des Verbrennungsmotors oder zu Beginn des Startvorgangs, auf.

In einer Ausführungsform weist der Verbrennungsmotor ein zweites Auslassventil auf, das demselben Zylinder wie das erste Auslassventil zugeordnet ist. Das Verfahren kann dann ferner das Geschlossen-Halten des zweiten Auslassventils mittels eines nockenfreien Abschnitts des Schiebenockensystems während des ersten Abschnitts des Startvorgangs, aufweisen. Das Verfahren kann ferner das Umschalten von dem nockenfreien Abschnitt zu einem dritten Nocken des Schiebenockensystems aufweisen. Der dritte Nocken kann insbesondere wie der erste Nocken ausgebildet sein. Das Verfahren kann ferner das Betätigen des zweiten Auslassventils mit dem dritten Nocken zum Öffnen des zweiten Auslassventils im Ausschubtakt während des zweiten Abschnitts des Startvorgangs aufweisen. Damit kann zum einen das zweite Auslassventil im ersten Abschnitt des Startvorgangs "geschont" werden und andererseits bei einem Motorbremsbetrieb eine Belastung des variablen Ventiltriebs verringert werden.

In einerweiteren Ausführungsform weist der Verbrennungsmotor eine erste Gruppe von Schiebenockensystemen und eine zweite Gruppe von Schiebenockensystemen auf. Die erste Gruppe betätigt während des ersten Abschnitts des Startvorgangs das entsprechende erste Auslassventil mittels des entsprechenden zweiten Nockens. Die zweite Gruppe betätigt während des ersten Abschnitts des Startvorgangs das entsprechende erste Auslassventil mittels des entsprechenden ersten Nockens. Die erste Gruppe und die zweite Gruppe umfassen jeweils mindestens ein Schiebenockensystem. Damit müssen nicht alle Schiebenockensysteme zum Verkürzen Startvorgangs verwendet werden, sodass ein Verschleiß an den Schiebenockensystemen verringert werden kann. Eine ausreichende Verkürzung des Startvorgangs kann bereits durch das entsprechende Ansteuern einiger oder auch nur eines Schiebenockensystems erzielt werden.

In einer Weiterbildung erfolgt eine Zuordnung der Schiebenockensysteme zur ersten Gruppe und zweiten Gruppe rollierend, insbesondere rollierend zwischen aufeinanderfolgenden Startvorgängen. Damit kann ein Verschleiß unter den Schiebenockensystemen vergleichmäßigt werden.

Vorzugsweise wird eine Anzahl von Schiebenockensystemen in der ersten Gruppe und/oder der zweiten Gruppe in Anhängigkeit von einer erfassten Motortemperatur des Verbrennungsmotors und/oder einer erfassten Außentemperatur bestimmt. Folglich können bei günstigen Startbedingungen weniger Schiebenockensysteme zum Verkürzen des Startvorgangs verwendet werden. Dies kann den Verschleiß verringern.

Die Erfindung betrifft ferner einen variablen Ventiltrieb für einen Verbrennungsmotor eines Kraftfahrzeugs, insbesondere Nutzfahrzeugs. Der variable Ventiltrieb weist ein erstes Auslassventil, eine Nockenwelle, ein Schiebenockensystem mit einem Nockenträger, der auf der Nockenwelle drehfest und axial verschiebbar angeordnet ist und einen ersten Nocken und einen zweiten Nocken aufweist, auf. Der erste Nocken und der zweite Nocken sind in einer Längsrichtung der Nockenwelle versetzt angeordnet. Der variable Ventiltrieb weist zudem eine Steuereinheit auf, die dazu ausgebildet ist, das Verfahren zum Starten des Verbrennungsmotors wie hierin offenbart durchzuführen.

Der Begriff "Steuereinheit" bezieht sich auf eine Steuerelektronik, die je nach Ausbildung Steuerungsaufgaben und/oder Regelungsaufgaben übernehmen kann.

Vorzugsweise ist der Nockenträger axial verschiebbar zwischen einer ersten Axialposition und einer zweiten Axialposition auf der Nockenwelle angeordnet. Der Ventiltrieb weist ferner eine Übertragungsvorrichtung auf. In der ersten Axialposition des Nockenträgers ist die Übertragungsvorrichtung in Wirkverbindung zwischen dem ersten Nocken und dem ersten Auslassventil. In der zweiten Axialposition des Nockenträgers ist die Übertragungsvorrichtung in Wirkverbindung zwischen dem zweiten Nocken und dem ersten Auslassventil. Der erste Nocken ist für einen Normalbetrieb des Verbrennungsmotors ausgebildet, bei dem der erste Nocken das erste Auslassventil im Ausschubtakt offen hält. Der zweite Nocken ist für einen Motorbremsbetrieb des Verbrennungsmotors ausgebildet, bei dem der zweite Nocken das erste Auslassventil im Verdichtungstakt und/oder im Ausschubtakt zunächst geschlossen hält und vor Erreichen eines oberen Totpunkts einer Kolbenbewegung eines Kolbens des Verbrennungsmotors das erste Auslassventil öffnet.

Es versteht sich, dass während der zweite Nocken im Eingriff mit der ersten Übertragungsvorrichtung ist, das oder die Einlassventile weiterhin nur während des Einlasstaktes öffnen. Es kommt jedoch zu keiner Kraftstoffeinleitung und Gemischzündung.

Der erste Nocken und der zweite Nocken können eine unterschiedliche Nockenkontur aufweisen und/oder in einer Umfangsrichtung des Nockenträgers versetzt zueinander angeordnet sein.

In einem Ausführungsbeispiel weist der Nockenträger einen dritten Nocken, der wie der erste Nocken ausgebildet ist, und einen nockenfreien Abschnitt auf. Der erste Nocken, der zweite Nocken, der dritte Nocken und der nockenfreie Abschnitt sind in einer Längsrichtung der Nockenwelle versetzt angeordnet. Insbesondere grenzen der erste Nocken an den zweiten Nocken und der dritte Nocken an den nockenfreien Abschnitt. Die Integration eines dritten Nockens und des nockenfreien Abschnitts ermöglicht, dass ein zweites Auslassventil im Bremsbetrieb und im ersten Abschnitt des Startvorgangs anders betätigt werden kann als das erste Auslassventil. Im Normalbetrieb und im zweiten Abschnitt des Startvorgangs kann das zweite Auslassventil hingegen wie das erste Auslassventil betätigt werden, da der dritte Nocken und der erste Nocken gleich geformt sind.

Der nockenfreie Abschnitt wird auch als Nullnocken bezeichnet. Der nockenfreie Abschnitt weist eine Zylindermantelfläche ohne Erhebung zum Betätigen der Übertragungsvorrichtung auf.

Vorzugsweise weist der Ventiltrieb ein zweites Auslassventil, das insbesondere demselben Zylinder zugeordnet ist wie das erste Auslassventil, und eine zweite Übertragungsvorrichtung auf. Die zweite Übertragungsvorrichtung ist in der ersten Axialposition des Nockenträgers in Wirkverbindung zwischen dem dritten Nocken und dem zweiten Auslassventil. In der zweiten Axialposition des Nockenträgers hält die zweite Übertragungsvorrichtung das zweite Auslassventil aufgrund der Ausbildung des nockenfreien Abschnitts geschlossen. Hierbei kann der nockenfreie Abschnitt in Eingriff oder außer Eingriff mit der zweiten Übertragungsvorrichtung sein.

Es versteht sich, dass die zweite Übertragungsvorrichtung in der zweiten Axialposition des Nockenträgers mit keinem anderen Nocken des Nockenträgers in Wirkverbindung ist.

Diese Ausgestaltung hat den Vorteil, dass nur das erste Auslassventil für den Bremsbetrieb und den ersten Abschnitt des Startvorgangs verwendet wird. Das zweite Auslassventil verbleibt dann, wenn das erste Auslassventil für den Bremsbetrieb oder den ersten Abschnitt des Startvorgangs verwendet wird, während des gesamten Zyklus geschlossen. Damit können die Belastungen auf den variablen Ventiltrieb verringert werden. Insbesondere ergeben sich beim Öffnen eines Auslassventils gegen den Druck im Zylinder große Flächenpressungen zwischen dem Nocken und der Kontaktfläche der Übertragungsvorrichtung. In Ausgestaltungen, bei denen beide Auslassventile während des Bremsbetriebs betätigt werden, muss der variable Ventiltrieb entsprechend robuster gestaltet werden.

In einem alternativen Ausführungsbeispiel weist der Ventiltrieb ferner ein zweites Auslassventil auf, das insbesondere demselben Zylinder zugeordnet ist wie das erste Auslassventil. Die erste Übertragungsvorrichtung ist in der ersten Axialposition des Nockenträgers zusätzlich in Wirkverbindung zwischen dem ersten Nocken und dem zweiten Auslassventil und in der zweiten Axialposition zusätzlich in Wirkverbindung zwischen dem zweiten Nocken und dem zweiten Auslassventil.

Der erste Nocken und der dritte Nocken können eine gleiche Nockenkontur aufweisen und/oder in einer Umfangsrichtung des Nockenträgers zueinander (fluchtend) ausgerichtet angeordnet sein.

Diese Ausgestaltung hat den Vorteil, dass beide Auslassventile für den Bremsbetrieb verwendet werden. Beide Auslassventile werden über die gleiche Übertragungsvorrichtung und den gleichen Nocken betätigt.

In einer Ausführungsvariante weist der Nockenträger eine erste Eingriffsspur zum axialen Verschieben des Nockenträgers in eine erste Richtung auf. Die erste Eingriffsspur erstreckt sich insbesondere spiralförmig.

Die erste Eingriffsspur ist dazu ausgebildet, im Eingriff mit einem Aktor den Nockenträger axial zu verschieben, zum Beispiel von der ersten Axialposition zu der zweiten Axialposition oder von der zweiten Axialposition zu der ersten Axialposition.

In einem besonders bevorzugten Ausführungsbeispiel ist die erste Eingriffsspur in dem nockenfreien Abschnitt angeordnet. Mit anderen Worten gesagt, erstreckt sich die erste Eingriffsspur in dem Nullnocken.

Eine solche Ausgestaltung bietet den Vorteil, dass der nockenfreie Abschnitt zum einen für die Axialverschiebung verwendet wird. Zum anderen sorgt der nockenfreie Abschnitt dafür, dass das zweite Auslassventil im Motorbremsbetrieb und im ersten Abschnitt des Startvorgangs nicht geöffnet wird. Durch die Funktionsintegration kann ein Bauraum für den Nockenträger verkleinert werden.

In einer weiteren Ausführungsvariante ist die erste Eingriffsspur und/oder der nockenfreie Abschnitt zwischen dem ersten Nocken und dem dritten Nocken oder an einem Ende des Nockenträgers angeordnet. Die Anordnung der Nocken, des nockenfreien Abschnitts und der ersten Eingriffsspur kann flexibel den jeweiligen Anforderungen angepasst werden.

In einer Ausführungsform weist der Nockenträger eine zweite Eingriffsspur zum axialen Verschieben des Nockenträgers in eine zweite Richtung, die der ersten Richtung entgegengesetzt ist, auf. Die zweite Eingriffsspur ist zwischen dem ersten Nocken und dem dritten Nocken oder an einem Ende des Nockenträgers angeordnet. Die zweite Eingriffsspur kann sich insbesondere spiralförmig erstrecken.

Die zweite Eingriffsspur ist dazu ausgebildet, im Eingriff mit einem Aktor den Nockenträger axial zu verschieben, zum Beispiel von der ersten Axialposition zu der zweiten Axialposition oder von der zweiten Axialposition zu der ersten Axialposition. Die erste und zweite Eingriffsspur bieten eine zuverlässige Möglichkeit zum Verschieben des Nockenträgers.

In einer weiteren Ausführungsform weist der variable Ventiltrieb einen ersten Aktor auf, der dazu ausgebildet ist, selektiv in Eingriff mit der ersten Eingriffsspur zum Verschieben des Nockenträgers in die erste Richtung zu gelangen. Alternativ oder zusätzlich weist der variable Ventiltrieb einen zweiten Aktor auf, der dazu ausgebildet ist, selektiv in Eingriff mit der zweiten Eingriffsspur zum Verschieben des Nockenträgers in die zweite Richtung zu gelangen.

Vorteilhafterweise weist die Nockenwelle eine Arretierungsvorrichtung mit einem elastisch vorgespannten Element auf, das in der ersten Axialposition des Nockenträgers in eine erste Ausnehmung im Nockenträger eingreift und in der zweiten Axialposition des Nockenträgers in eine zweite Ausnehmung im Nockenträger eingreift.

Die Arretierungsvorrichtung hat den Vorteil, dass der Nockenträger in der ersten und zweiten Axialposition festgesetzt werden kann. Der Nockenträger kann sich somit nicht unbeabsichtigt entlang einer Längsrichtung der Nockenwelle verschieben.

In einem weiteren Ausführungsbeispiel ist die erste Übertragungseinrichtung und/oder die zweite Übertragungseinrichtung als ein Hebel, insbesondere ein Kipphebel oder ein Schlepphebel, oder ein Stößel ausgebildet. Ein Schlepphebel kann beispielsweise bei einer obenliegenden Nockenwelle verwendet werden. Ein Kipphebel kann beispielsweise bei einer untenliegenden Nockenwelle verwendet werden.

In einer weiteren Ausführungsvariante ist die Nockenwelle als eine obenliegende Nockenwelle oder eine untenliegende Nockenwelle angeordnet. Alternativ oder zusätzlich ist die Nockenwelle Teil eines Doppelnockenwellensystems ist, das zusätzlich eine weitere Nockenwelle zur Betätigung mindestens eines Einlassventils aufweist.

In einer weiteren Ausführungsform kann die Nockenwelle für das oder die Auslassventile und/oder die weitere Nockenwelle für das oder die Einlassventile einen Phasensteller aufweisen. Der Phasensteller ist dazu ausgebildet, einen Drehwinkel einer Nockenwelle relativ zu einem Drehwinkel einer Kurbelwelle zu verstellen. Somit kann der Phasensteller eine Verstellung der Steuerzeiten für die jeweiligen Ventile ermöglichen. Der Phasenversteller kann beispielsweise als hydraulischer Phasenversteller, insbesondere als ein Schwenkmotorphasenversteller, ausgebildet sein. Eine solche Ausführungsform hat den Vorteil, dass die Flexibilität des Systems durch die Kombination mit dem verschiebbaren Nockenträger weiter gesteigert wird.

In einer weiteren Ausführungsvariante ist der zweite Nocken so ausgebildet, dass das erste Auslassventil nach dem Öffnen im Verdichtungstakt mit einem größeren Ventilhub geöffnet wird als nach dem Öffnen im Ausschiebetakt. Alternativ oder zusätzlich ist der zweite Nocken so ausgebildet, dass das erste Auslassventil mit einem kleineren Ventilhub als beim ersten Nocken geöffnet wird. Das Vorsehen von mehrstufigen Ventilhüben, die kleiner sind als die Ventilhübe während des normalen Betriebs, verringert die Belastung auf den Ventiltrieb. Insbesondere beim Öffnen eines Auslassventils gegen den Druck im Zylinder wird der Ventiltrieb stark belastet.

In Ausführungsformen, in denen der zweite Nocken auch zum Betätigen des zweiten Auslassventils verwendet wird, gelten die Ausführungen hierin, die sich auf die Wirkung des zweiten Nockens auf das erste Auslassventil beziehen, gleichermaßen für das zweite Auslassventil. In Ausführungsformen, in denen der dritte Nocken zum Betätigen des zweiten Auslassventils verwendet wird, gelten die Ausführungen hierin, die sich auf die Wirkung des ersten Nockens auf das erste Auslassventil beziehen, gleichermaßen für den dritten Nocken und das zweite Auslassventil.

Letztlich betrifft die Erfindung zudem ein Kraftfahrzeug, insbesondere Nutzfahrzeug, mit einem variablen Ventiltrieb wie hierin offenbart.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine perspektivische Ansicht eines beispielhaften variablen Ventiltriebs;
- Figur 2: eine weitere perspektivische Ansicht des beispielhaften variablen Ventiltriebs;
- Figur 3: eine Draufsicht auf eine Nockenwelle des beispielhaften variablen Ventiltriebs;
- Figur 4: eine Längsschnittansicht der Nockenwelle von Figur 3 entlang der Linie A-A;
- Figur 5: ein beispielhaftes Ventilsteuerungsdiagramm des variablen Ventiltriebs;
- Figur 6A: eine erste Querschnittansicht der Nockenwelle von Figur 4 entlang der Linie B-B;
- Figur 6B: eine zweite Querschnittansicht der Nockenwelle von Figur 4 entlang der Linie C-C;
- Figur 7: ein beispielhaftes Verfahren zum Starten des Verbrennungsmotors gemäß der vorliegenden Offenbarung; und
- Figur 8: ein Drehzahldiagramm das eine Drehzahlverlauf des Verfahrens zum Starten des Verbrennungsmotors wie hierin offenbart relativ zu einem Drehzahlverlauf eines gewöhnlichen Startvorgangs zeigt.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

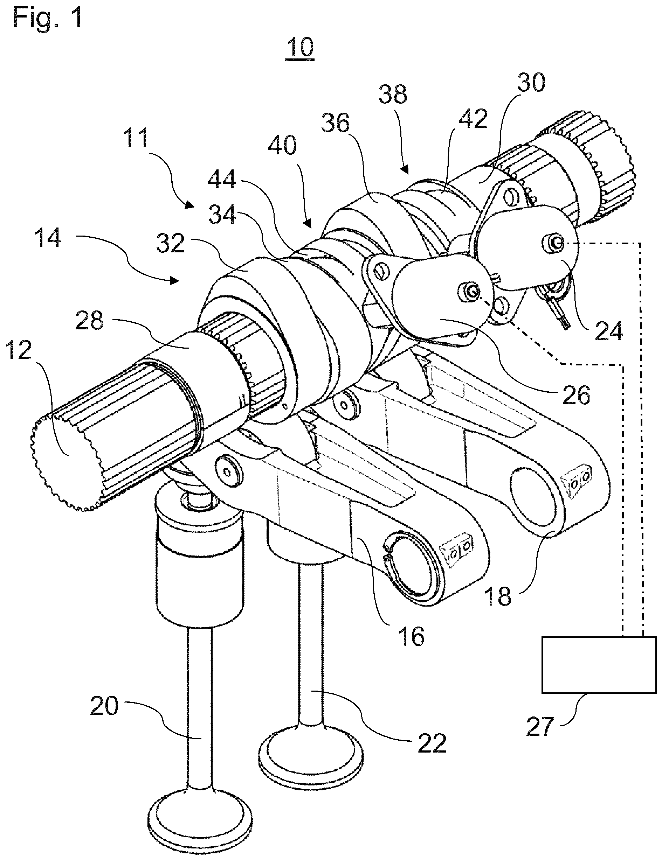

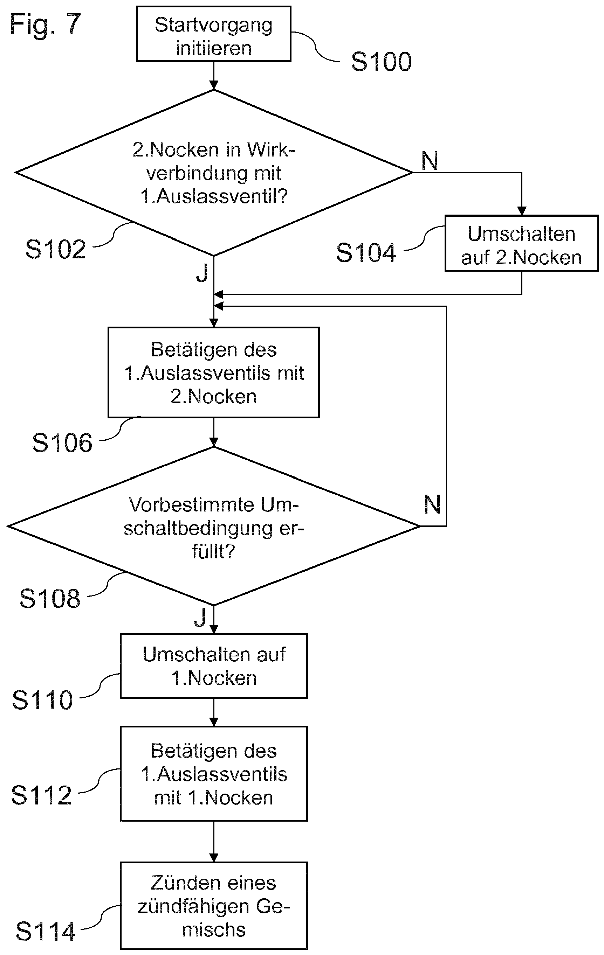

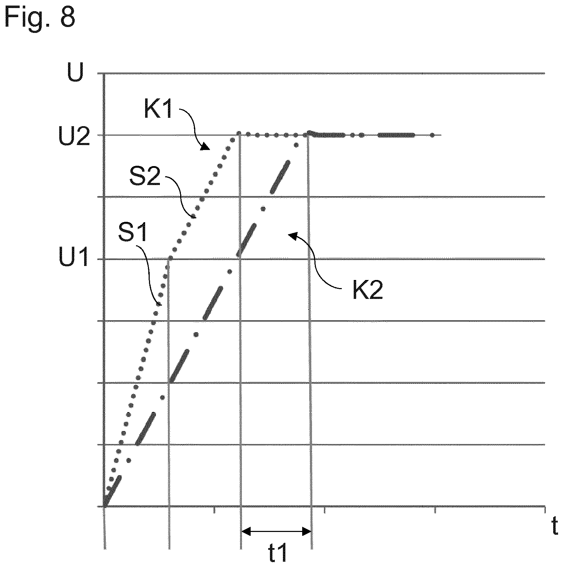

Nachfolgend ist unter Bezugnahme auf die Figuren 1 bis 6B zunächst eine besonders bevorzugte Ausführungsform eines variablen Ventiltriebs beschrieben, die sowohl zum Ausführen des hierin offenbarten Verfahrens zum Starten des Verbrennungsmotors als auch zum Ausführen eines Motorbremsbetriebs geeignet ist. Im Anschluss wird unter Bezugnahme auf die Figuren 7 und 8 insbesondere das Verfahren zum Starten des Verbrennungsmotors beschrieben. Das Verfahren kann den hierin offenbarten variablen Ventiltrieb oder ein modifiziertes Schiebenockensystem verwenden. Der Startvorgang weist einen ersten Abschnitt und einen zeitlich darauffolgenden, zweiten Abschnitt auf. Der erste Abschnitt des Startvorgangs und der zweite Abschnitt des Startvorgangs unterscheiden sich in einer unterschiedlichen Betätigung mindestens eines Auslassventils.

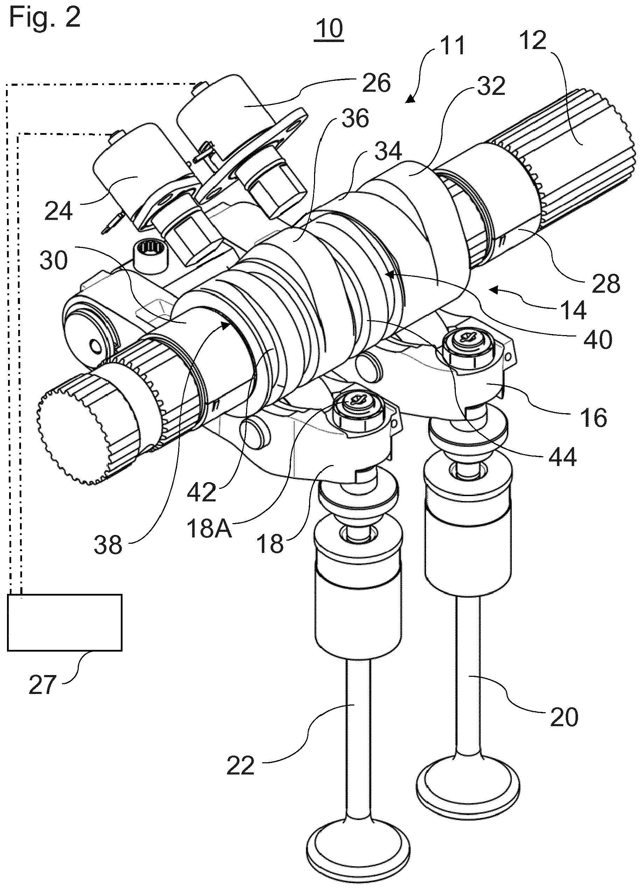

In den Figuren 1 und 2 ist ein variabler Ventiltrieb 10 gezeigt. Der variable Ventiltrieb 10 weist eine Nockenwelle 12 und einen Nockenträger 14 auf. Zusätzlich weist der variable Ventiltrieb 10 eine erste und zweite Übertragungsvorrichtung 16 und 18 sowie ein erstes und zweites Auslassventil 20 und 22 auf. Zudem weist der variable Ventiltrieb 10 einen ersten Aktor 24 und einen zweiten Aktor 26 auf. Der Nockenträger 14, die Übertragungsvorrichtungen 16 und 18 sowie die Aktoren 24 und 26 bilden ein Schiebenockensystem 11.

Die Nockenwelle 12 ist als eine Ausgangsnockenwelle ausgebildet, die Ausgangsventile 20 und 22 betätigt. Die Nockenwelle 12 ist Teil eines Doppelnockenwellensystems (nicht im Detail dargestellt), das zusätzlich eine Einlassnockenwelle (nicht dargestellt) zur Betätigung von einem oder mehreren Einlassventilen aufweist. Die Nockenwelle 12 ist gemeinsam mit der Einlassnockenwelle als obenliegende Nockenwelle angeordnet. Die Nockenwelle 12 und die Einlassnockenwelle bilden somit ein sogenanntes DOHC-System (engl. double overhead camshaft). Alternativ könnte die Nockenwelle 12 auch ein sogenanntes SOHC-System bilden (engl. single overhead camshaft). In anderen Ausführungsformen kann die Nockenwelle 12 auch als untenliegende Nockenwelle angeordnet sein.

Auf der Nockenwelle 12 ist der Nockenträger 14 drehfest angeordnet. Der Nockenträger 14 ist zusätzlich axial verschiebbar entlang einer Längsachse der Nockenwelle 12 angeordnet. Der Nockenträger 14 kann zwischen einem ersten Anschlag 28 und einem zweiten Anschlag 30 axial verschiebbar sein.

Unter Bezugnahme auf die Figuren 1 bis 4 ist nachfolgend der Nockenträger 14 beschrieben. Der Nockenträger 14 weist drei Nocken 32, 34 und 36 auf, die in einer Längsrichtung des Nockenträgers 14 und der Nockenwelle 12 voneinander versetzt sind. Der erste Nocken 32 ist an einem ersten Ende des Nockenträgers 14 angeordnet und für einen Normalbetrieb und einen zweiten Abschnitt des Startvorgangs ausgebildet, wie später beispielhaft im Detail beschrieben. Der zweite Nocken 34 ist angrenzend an den ersten Nocken 32 angeordnet und für einen Motorbremsbetrieb und den ersten Abschnitt des Startvorgangs ausgebildet, wie später ebenfalls beispielhaft im Detail beschrieben. Der dritte Nocken 36 ist beabstandet zu dem zweiten Nocken 34 und dem zweiten Ende des Nockenträgers 14 angeordnet. Der dritte Nocken 36 ist für den Normalbetrieb ausgebildet. Der dritte Nocken 36 ist wie der ersten Nocken 32 geformt.

Der Nockenträger 14 weist zudem einen ersten nockenfreien Abschnitt 38 und einen zweiten nockenfreien Abschnitt 40 auf. Der erste nockenfreie Abschnitt 38 ist am zweiten Ende des Nockenträgers 14 angeordnet. Der zweite nockenfreie Abschnitt 40 ist zwischen dem zweiten Nocken 34 und dem dritten Nocken 36 angeordnet. Im ersten nockenfreien Abschnitt 38 erstreckt sich eine erste Eingriffsspur (Schaltkulisse) 42 spiralförmig um eine Längsachse des Nockenträgers 14. Im zweiten nockenfreien Abschnitt 40 erstreckt sich eine zweite Eingriffsspur (Schaltkulisse) 44 spiralförmig um die Längsachse des Nockenträgers 14.

Zum Verschieben des Nockenträgers 14 zwischen den Anschlägen 28 und 30 können die Aktoren 24 und 26 (Figuren 1 und 2) mit ausfahrbaren Elementen (nicht im Detail gezeigt) selektiv in die Eingriffsspuren 42, 44 eingreifen. Im Einzelnen kann der erste Aktor 24 selektiv in die erste Eingriffsspur 42 zum Verschieben des Nockenträgers 14 von einer Axialposition zu einer anderen Axialposition eingreifen. In einer ersten Axialposition liegt der Nockenträger 14 an dem zweiten Anschlag 30 an. In einer zweiten Axialposition liegt der Nockenträger 14 an dem ersten Anschlag 28 an. In den Figuren 1 bis 4 ist der Nockenträger in der ersten Axialposition dargestellt. Der zweite Aktor 26 wiederum kann selektiv in die zweite Eingriffsspur 44 eingreifen. Dann wird der Nockenträger 14 von der ersten Axialposition zu der zweiten Axialposition verschoben. Der erste Aktor 24 und der zweite Aktor 26 werden von einer schematisch dargestellten Steuereinheit 27 (Figuren 1 und 2) angesteuert.

Die Verschiebung wird dadurch ausgelöst, dass das ausgefahrene Element des jeweiligen Aktors 24, 26 bezüglich einer Axialrichtung der Nockenwelle 12 ortsfest ist. Folglich wird der verschiebbare Nockenträger 14 aufgrund der Spiralform der Eingriffsspuren 42, 44 in einer Längsrichtung der Nockenwelle 12 verschoben, wenn das ausgefahrene Element in die jeweilige Eingriffsspur 42, 44 eingreift. Am Ende des Verschiebevorgangs wird das verschiebbare Element des jeweiligen Aktors 24, 26 von der jeweiligen Eingriffsspur 42, 44 entgegengesetzt zu der Ausfahrrichtung geführt und somit eingefahren. Das verschiebbare Element des jeweiligen Aktors 24, 26 gelangt außer Eingriff mit der jeweiligen Eingriffsspur 42, 44.

Die erste Übertragungsvorrichtung 16 und die zweite Übertragungsvorrichtung 18 (Figuren 1 und 2) stellen eine Wirkverbindung zwischen dem Nockenträger 14 und den Auslassventilen 20, 22 her. Das erste Auslassventil 20 wird betätigt (geöffnet), wenn der erste Nocken 32 oder der zweite Nocken 34 die erste Übertragungsvorrichtung 16 nach unten drückt. Das zweite Auslassventil 22 wird betätigt (geöffnet) wenn der dritte Nocken 36 die zweite Übertragungsvorrichtung 18 nach unten drückt.

Befindet sich der Nockenträger 14 in der ersten Axialposition (wie in den Figuren 1 bis 4 gezeigt), ist die erste Übertragungsvorrichtung 16 in Wirkverbindung zwischen dem ersten Nocken 32 und dem ersten Auslassventil 20. Mit anderen Worten gesagt, ist die erste Übertragungsvorrichtung 16 in der ersten Axialposition des Nockenträgers 14 nicht in Wirkverbindung zwischen dem zweiten Nocken 34 und dem ersten Auslassventil 20. Das erste Auslassventil 20 wird gemäß einer Kontur des ersten Nockens 32 betätigt. In der zweiten Axialposition des Nockenträgers 14 ist die erste Übertragungsvorrichtung 16 in Wirkverbindung zwischen dem zweiten Nocken 34 und dem ersten Auslassventil 20. Das erste Auslassventil 20 wird gemäß einer Kontur des zweiten Nockens 34 betätigt.

In der ersten Axialposition des Nockenträgers 14 ist die zweite Übertragungsvorrichtung 18 in Wirkverbindung zwischen dem dritten Nocken 36 und dem zweiten Auslassventil 22. Das zweite Auslassventil 22 wird gemäß einer Kontur des dritten Nockens 36 betätigt. In der zweiten Axialposition des Nockenträgers 14 betätigt die zweite Übertragungsvorrichtung 18 das zweite Auslassventil 22 nicht. In der zweiten Axialposition des Nockenträgers 14 liegt ein Kontaktbereich 18A der zweiten Übertragungsvorrichtung 18 an der gleichen Axialposition bezüglich der Nockenwelle 12 wie der erste nockenfreie Abschnitt 38. Der erste nockenfreie Abschnitt 38 weist keine Erhebung zum Betätigen der zweiten Übertragungsvorrichtung 18 auf. Ist der Nockenträger 14 in der zweiten Axialposition, wird das zweite Auslassventil 22 nicht betätigt.

Der erste nockenfreie Abschnitt 38 hat somit zwei Funktionen. Einerseits nimmt der erste nockenfreie Abschnitt 38 die erste Führungsspur 42 auf. Andererseits dient der erste nockenfreie Abschnitt 38 dazu, dass keine Betätigung des zweiten Auslassventils 42 in der zweiten Axialposition des Nockenträgers 14 erfolgt. Diese Funktionsintegration ist aus Bauraumgründen günstig.

In der dargestellten Ausführungsform sind die erste Übertragungsvorrichtung 16 und die zweite Übertragungsvorrichtung 18 jeweils als ein Schlepphebel ausgebildet. In anderen Ausführungsformen können die Übertragungsvorrichtungen 16 und 18 als Kipphebel oder Stößel ausgebildet sein. In einigen Ausführungsformen können die Übertragungsvorrichtungen 16 und 18 Nockenfolger, zum Beispiel in Form von drehbaren Rollen, aufweisen.

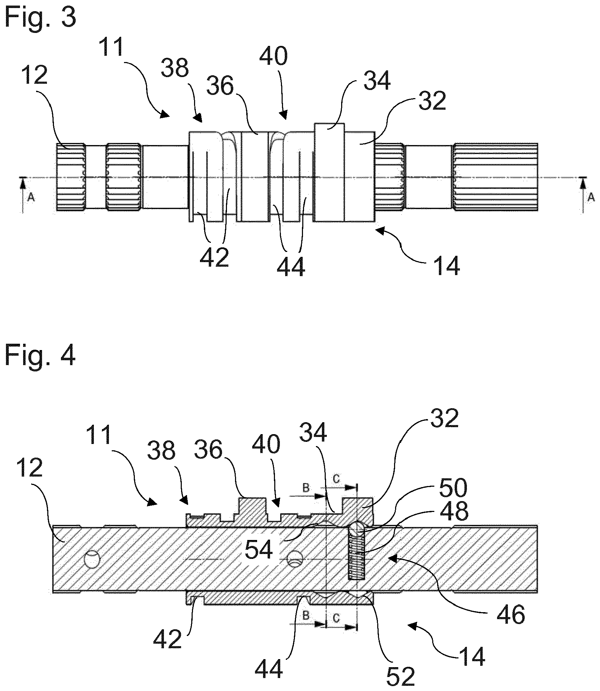

Unter Bezugnahme auf Figur 4 ist eine Arretierungsvorrichtung 46 gezeigt. Die Arretierungsvorrichtung 46 weist ein elastisches Element 48 und einen Sperrkörper 50 auf. Das elastische Element 48 ist in einem Sackloch der Nockenwelle 12 angeordnet. Das elastische Element 48 spannt der Sperrkörper 50 gegen den Nockenträger 14 vor. In einer Innenumfangsfläche des Nockenträgers 14 sind eine erste und zweite Ausnehmung 52 und 54 angeordnet. Zum Arretieren des Nockenträgers 14 wird der Sperrkörper 50 in die erste Ausnehmung 52 gedrückt, wenn der Nockenträger 14 in der ersten Axialposition ist. In der zweiten Axialposition des Nockenträgers 14 wird der Sperrkörper 50 in die zweite Ausnehmung 54 gedrückt.

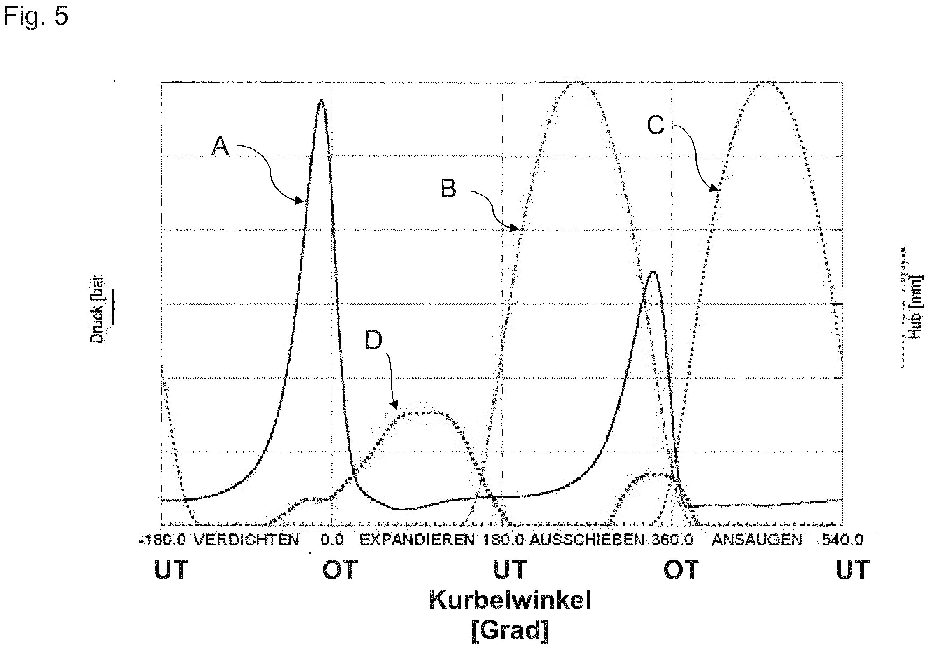

Unter Bezugnahme auf Figur 5 sind nachfolgend die Steuerung des ersten Auslassventils 20 sowie dessen Einfluss auf einen Zylinderdruck beschrieben. Figur 5 zeigt einen vollständigen Viertakt-Zyklus bestehend aus Verdichten, Expandieren, Ausschieben und Ansaugen.

Die Kurve A beschreibt den Verlauf des Zylinderdrucks im Motorbremsbetrieb, wenn der zweite Nocken 34 in Wirkverbindung mit dem ersten Auslassventil 20 ist. Die Kurve B zeigt den Verlauf des Ventilhubs des ersten Auslassventils 20, wenn der erste Nocken 32 in Verbindung mit dem ersten Auslassventil 20 ist (d. h. während des Normalbetriebs und des zweiten Abschnitts des Startvorgangs). Die dritte Kurve C zeigt den Verlauf des Ventilhubs eines Einlassventils sowohl während des Normalbetriebs, im Motorbremsbetrieb und während des Startvorgangs. Die Kurve D zeigt den Verlauf des Ventilhubs des ersten Auslassventils 20, wenn der zweite Nocken 34 in Wirkverbindung mit dem ersten Auslassventil 20 ist (d. h. während des Motorbremsbetriebs und des ersten Abschnitts des Startvorgangs).

Die Kurve B zeigt, dass das Auslassventil im Normalbetrieb und im zweiten Abschnitt des Startvorgangs während des Ausschiebetaktes offen ist. Die Kurve C zeigt, dass das Einlassventil im Normalbetrieb, im Bremsbetrieb und während des Startvorgangs während des Ansaugtaktes (Einlasstaktes) offen ist.

Die Kurve D zeigt, dass das Auslassventil zum Ende des Verdichtungstaktes im Bereich des oberen Totpunkts bei rund 60° KW bis 100° KW vor dem oberen Totpunkt leicht geöffnet wird. Am oberen Totpunkt wird das Auslassventil weiter geöffnet und schließt am Ende des Expansionstaktes ungefähr am unteren Totpunkt. Das Öffnen des Auslassventils zum Ende des Verdichtungstaktes bewirkt, dass die verdichtete Luft im Zylinder durch das geöffnete Auslassventil in das Abgassystem durch den sich zum oberen Totpunkt bewegenden Kolben geschoben wird. Die zuvor verrichtete Verdichtungsarbeit bremst die Kurbelwelle und somit den Verbrennungsmotor. Der Zylinderdruck steigt im Verdichtungstakt zunächst an, sinkt dann jedoch infolge der Öffnung des Auslassventils schon vor dem oberen Totpunkt ab (vgl. Kurve A). Der Verdichtungsenddruck ist geringer als im Normalbertrieb. Das offene Auslassventil während des Expansionstaktes bewirkt, dass Luft aus den Abgasleitungen zurück in den Zylinder gesaugt wird. Am Ende des Expansionstaktes ist der Zylinder im Wesentlichen mit Luft aus dem Abgassystem gefüllt.

Die Kurve D zeigt zudem, dass das Auslassventil nach Erreichen des unteren Totpunkts am Ende des Expansionstaktes zunächst geschlossen bleibt. Zum Ende des Ausschiebetaktes öffnet sich das Auslassventil im Bereich des oberen Totpunkts. Die Öffnung erfolgt wiederum bei rund 60° KW bis 100° KW vor dem oberen Totpunkt. Das geschlossene Auslassventil während des ersten Abschnitts des Ausschiebetakts bewirkt, dass die im Expansionstakt angesaugte Luft unter Verrichtung von Arbeit verdichtet wird. Der Zylinderdruck steigt an (Kurve A). Die Verrichtungsarbeit bremst die Kurbelwelle und somit den Verbrennungsmotor. Die Öffnung des Auslassventils zum Ende des Ausschiebetaktes führt dazu, dass die Luft durch das geöffnete Auslassventil in das Abgassystem geschoben wird. Im Ansaugtakt wird der Zylinder wieder mit Luft durch das oder die geöffneten Einlassventile (Kurve C) gefüllt. Der Zyklus beginnt erneut.

Wie oben stehend erläutert ist, kommt es durch den Einsatz des zweiten Nockens zur Steuerung des Auslassventils zu einer zweifachen Kompression mit anschließender Dekompression, sodass eine Motorbremsfunktionalität gewährleistet wird.

Bei niedrigen Drehzahlen, insbesondere während eines Startvorgangs des Verbrennungsmotors bspw. unterhalb von 1/6 einer Leerlaufdrehzahl, fällt die zweifache Dekompression hingegen nicht mehr so stark ins Gewicht. Dies kann während des Startvorgangs des Verbrennungsmotors genutzt werden. Der Anlasser muss im Startvorgang weniger Arbeit zum Drehen der Kurbelwelle verrichten, wenn das erste Auslassventil 20 gemäß der Kurve D betätigt wird, da im Verdichtungstakt der Verdichtungsenddruck geringer ist als bei einem Auslassventil, das im Verdichtungstakt vollständig geschlossen ist (siehe Kurve B). Insbesondere durch den geringen Verdichtungsenddruck im Verdichtungstakt und der damit eingesparten Verdichtungsarbeit kann die zusätzlich aufgewendete Arbeit aufgrund der zweifachen Dekompression während des Anlassens des Verbrennungsmotors mehr als überkompensiert werden. Dadurch kann der Anlasser die Kurbelwelle im ersten Abschnitt des Startvorgangs in kürzerer Zeit auf eine gewünschte Drehzahl beschleunigen. Dies ist später unter Bezugnahme auf die Figuren 7 und 8 näher beschrieben.

Damit bietet das hierin offenbarte Schiebenockensystem 11 eine besonders bevorzugte Funktionsintegration für einen Motorbremsbetrieb und einen Startvorgang des Verbrennungsmotors.

Wie beim Vergleich der Kurven B und D auffällt, ist der Ventilhub des Auslassventils im Bremsbetrieb und im ersten Abschnitt des Startvorgangs (Kurve D) kleiner als im Normalbetrieb und im zweiten Abschnitt des Startvorgangs (Kurve B). Der Ventilhub ist zudem beim Öffnen des Auslassventils im Verdichtungs- und Expansionstakt zweistufig. Diese Maßnahmen bewirken, dass die Belastung des variablen Ventiltriebs im Bremsbetrieb verringert wird, da durch die Öffnung des Auslassventils gegen den Druck im Zylinder hohe Belastungen an dem Ventiltrieb auftreten können.

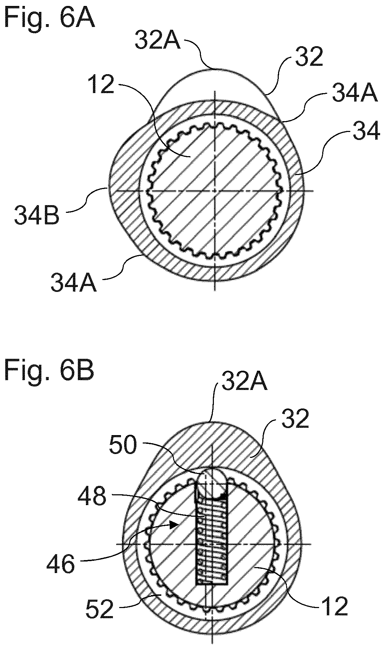

Die Figur 6A zeigt einen Querschnitt durch den zweiten Nocken 34. Die Figur 6B zeigt einen Querschnitt durch den ersten Nocken 32.

Der zweite Nocken 34 ist zur Erzielung der Kurve D aus Figur 5 ausgebildet. Dazu weist der zweite Nocken 34 insbesondere eine erste Erhebung 34A, eine zweite Erhebung 34B und eine dritte Erhebung 34C auf. Die erste, zweite und dritte Erhebung 34A-34C sind in Umfangsrichtung um den zweiten Nocken 34 versetzt angeordnet. Die erste Erhebung 34A führt zu der Öffnung eines Auslassventils am Ende des Verdichtungstaktes. Die zweite Erhebung 34B, die sich ausgehend von der ersten Erhebung 34A erstreckt, führt zu einer erweiterten Öffnung eines Auslassventils während des Expansionstaktes. Die dritte Erhebung 34C führt zu einer Öffnung eines Auslassventils am Ende des Auslasstaktes.

Die erste Erhebung 34A hat die kleinste Höhe der Erhebungen 34A-34C gemessen in einer Radialrichtung der Nockenwelle 12. Die zweite Erhebung 34B hat die größte Höhe der Erhebungen 34A-34C gemessen in einer Radialrichtung der Nockenwelle 12. Die dritte Erhebung 34C ist kleiner als die zweite Erhebung 34B und größer als die erste Erhebung 34A. Unterschiedliche Höhen der Erhebungen 34A-34C führen zu entsprechend unterschiedlichen Ventilhüben (vgl. Figur 5).

Die erste, zweite und dritte Erhebung 34A-34C ist jeweils umfangsversetzt zu einer Erhebung 32A des ersten Nockens 32 angeordnet. Der erste Nocken 32 ist zur Erzielung der Kurve B aus Figur 5 ausgebildet. Die Erhebung 32A des ersten Nockens 32 führt zu einer Öffnung eines Auslassventils während des Ausschiebetaktes. Die Erhebung 32A ist in einer Radialrichtung der Nockenwelle 12 gemessen höher als die Erhebungen 34A-34C. Der Ventilhub durch die Erhebung 32A ist größer als durch die Erhebungen 34A-34C.

Die Figur 6B zeigt zudem die Arretierungsvorrichtung 46 mit dem elastischen Element 48, dem Sperrkörper 50 und der ersten Ausnehmung 52.

Nachfolgend ist unter Bezugnahme auf die Figuren 1, 2, 7 und 8 ein Verfahren zum Starten eines Verbrennungsmotors offenbart. Die Figur 7 zeigt einen beispielhaften Ablauf mit beispielhaften Schritten des Verfahrens. Die Figur 8 zeigt eine Wirkung des Verfahrens im Vergleich zu einem normalen Startvorgang des Verbrennungsmotors.

Wie in Figur 7 gezeigt ist, wird im Schritt S100 der Startvorgang des Verbrennungsmotors zunächst initiiert. Dies kann beispielsweise durch Drehen eines Zündschlüssels in einem Zündschloss oder Drücken einer Zündtaste geschehen.

Im Schritt S102 wird geprüft, ob der zweiten Nocken 34 in Wirkverbindung mit dem ersten Auslassventil 20 steht. Steht das erste Auslassventil 20 nicht in Wirkverbindung mit dem zweiten Nocken 34, so wird im Schritt S104 auf den zweiten Nocken 34 umgeschaltet. Dabei bewegt sich der Nockenträger 14 des Schiebenockensystems 11 von der ersten Axialposition zu der zweiten Axialposition.

Im Anschluss an den Schritt S104 und wenn das Auslassventil bereits im Schritt S102 in Wirkverbindung mit dem zweiten Nocken 34 stand, wird ein Schritt S106 ausgeführt. Im Schritt S106 wird das erste Auslassventil 20 von dem zweiten Nocken 34 betätigt. Gleichzeitig dreht der Anlasser die Kurbelwelle des Verbrennungsmotors. Im ersten Abschnitt wird der Anlasser dadurch entlastet, dass aufgrund der Öffnung des ersten Auslassventils 20 im Verdichtungstakt ein geringerer Verdichtungsenddruck erzielt wird. Dadurch kann der Anlasser den Verbrennungsmotor im ersten Abschnitt des Startvorgangs in kurzer Zeit auf eine hohe Drehzahl beschleunigen.

Eine Zündung und Verbrennung in den Verbrennungskammern des Verbrennungsmotors ist nur möglich, wenn im Verdichtungstakt Luft oder ein Luft-Kraftstoffgemisch verdichtet und in den Verbrennungskammern gehalten wird. Das erste Auslassventil 20 muss dazu während des Verdichtungstaktes geschlossen bleiben. D. h., um letztendlich eine Zündung und Verbrennung in den Verbrennungskammern zum Abschließen des Startvorgangs zu ermöglichen, muss auf den ersten Nocken 32 umgeschaltet werden.

Der Zeitpunkt der Umschaltung wird im Schritt S108 bestimmt. Hier wird geprüft, ob eine vorbestimmte Umschaltbedingung erfüllt ist. Ist die vorbestimmte Umschaltbedingung erfüllt, wird im Schritt S110 von dem Schiebenockensystem 11 auf den ersten Nocken 32 umgeschaltet. Ist die vorbestimmte Umschaltbedingung nicht erfüllt, wird das erste Auslassventil 20 weiter mit dem zweiten Nocken 34 betätigt. Die vorbestimmte Umschaltbedingung kann bei Überschreiten eines vorbestimmten Drehzahlschwellwerts, zum Beispiel bei rund 1/5 der Leerlaufdrehzahl, und/oder bei Überschreiten eines vorbestimmten Drehmomentschwellwerts erfüllt sein. Zusätzliche oder alternative Umschaltbedingungen sind ebenso möglich. Beispielsweise kann nach Ablauf einer vorbestimmten Zeitdauer von dem zweiten Nocken 34 auf den ersten Nocken 32 umgeschaltet werden.

Nachdem im Schritt S110 auf den ersten Nocken 32 umgeschaltet wird, wird das erste Auslassventil 20 während des zweiten Abschnitts des Startvorgangs mit dem ersten Nocken 32 betätigt. Der Verbrennungsmotor wird weiterhin vom Anlasser gedreht, wodurch sich eine Drehzahl des Verbrennungsmotors weiter erhöht. Schließlich wird eine Zünddrehzahl erreicht, bei der im Schritt S114 ein zündfähiges Gemisch in den Verbrennungskammern des Verbrennungsmotors gezündet wird. Der Anlasser wird nicht länger benötigt. Der Startvorgang ist damit beendet. Der Verbrennungsmotor wird im Normalbetrieb betrieben, in dem der erste Nocken 32 das erste Auslassventil 20 betätigt.

Die Figur 8 zeigt die verschiedenen Abschnitte des Startvorgangs. Die Abszisse ist eine Zeitachse. Die Ordinate gibt eine Drehzahl des Verbrennungsmotors an. Die gepunktete Kurve K1 zeigt den Drehzahlverlauf für das hierin offenbarte Verfahren zum Starten. Die Strichpunktlinie K2 zeigt der Drehzahlverlauf für ein normales Startverfahren ohne Verwendung des hierin offenbarten Verfahrens zum Starten.

Im ersten Abschnitt S1 des Startvorgangs gemäß der Kurve K1 kann der Anlasser den Verbrennungsmotor auf eine höhere Drehzahl beschleunigen als dies in der gleichen Zeit bei einem gewöhnlichen Startvorgang gemäß der Kurve K2 der Fall ist. Der Grund hierfür liegt insbesondere in dem geringeren Verdichtungsenddruck im Verdichtungstakt im ersten Abschnitt S1 des Startvorgangs gemäß der Kurve K1.

Die Drehzahl gemäß der Kurve K1 steigt im ersten Abschnitt S1 des Startvorgangs schneller an als die Drehzahl der Kurve K2. Bei Erreichen eines Drehzahlschwellwerts U1 wird vom zweiten Nocken 34 auf den ersten Nocken 32 umgeschaltet. Im zweiten Abschnitt S2 des Startvorgangs weisen die Drehzahlkurven K1 und K2 einen ungefähr gleichen Anstieg auf. Der Grund hierfür liegt darin, dass im zweiten Abschnitt S2 des Startvorgangs das erste Auslassventil 20 wie bei einem gewöhnlichen Startvorgang betätigt wird, d. h. im Wesentlichen nur während des Auslasstaktes geöffnet wird.

Im zweiten Abschnitt S2 der Kurve K1 wird eine Zünddrehzahl U2 früher erreicht als bei der Kurve K2. Der Grund hierfür liegt im größeren Anstieg der Kurve K1 im ersten Abschnitt S1. Daraus ergibt sich ein Zeitvorteil t1 zum Erreichen der Zünddrehzahl U2 des Startvorgangs gemäß der Kurve K1 gegenüber einem Startvorgang gemäß der Kurve K2. Der Zeitvorteil kann in einem Bereich von beispielsweise bis zu rund 35 % der Gesamtdauer des Startvorgangs liegen. Bei Nutzfahrzeugen kann beispielsweise eine Zeitersparnis bis zu rund 3 Sekunden erzielt werden. Die Zünddrehzahl U2 kann bspw. rund 1/6 der Leerlaufdrehzahl betragen.

Bei Verwenden des Schiebenockensystems 11 wird im ersten Abschnitt S1 das zweite Auslassventil 22 aufgrund des nockenfreien Abschnitts 38 nicht betätigt. Zwischen dem ersten Abschnitt S1 und dem zweiten Abschnitt S2 wird von dem nockenfreien Abschnitt 38 auf den dritten Nocken 36 umgeschaltet. Im zweiten Abschnitt S2 wird das zweite Auslassventil 22 von dem dritten Nocken 36 betätigt. Damit trägt das zweite Auslassventil 22 im Startvorgang nicht zum vergrößerten Anstieg im Abschnitt S1 bei. Dennoch kann aufgrund dieser Funktionsweisen des Schiebenockensystems 11 der Motorbremsbetrieb wie hierin erläutert besonders bevorzugt ohne übermäßige Belastung des variablen Ventiltriebs 10 ausgeführt werden.

Das hierin offenbarte Verfahren zum Starten des Verbrennungsmotors kann auf vielfältige Art und Weise modifiziert und ergänzt werden.

Alternativ zu einer Umschaltung auf den zweiten Nocken 34 zu Beginn des Startvorgangs im Schritt S104 kann auch bereits beim Abschalten des Verbrennungsmotors auf den zweiten Nocken 34 umgeschaltet werden.

Beispielsweise ist es möglich, eine Betätigung des ersten Auslassventils 20 mit dem zweiten Nocken 34 von einer erfassten Außentemperatur und/oder einer erfassten Motortemperatur abhängig zu machen. Insbesondere bei niedrigen Außentemperaturen und einer niedrigen Motortemperatur kann das erste Auslassventil 20 mit dem zweiten Nocken 34 während des ersten Abschnitts S1 des Startvorgangs betätigt werden. Ist der Verbrennungsmotor hingegen noch warm oder liegen hohe Außentemperaturen vor, kann auf eine Betätigung des ersten Auslassventils 20 mit dem zweiten Nocken 34 während des ersten Abschnitts S1 des Startvorgangs ggf. verzichtet werden. Damit kann ein Verschleiß an dem Schiebenockensystem 11 verringert werden.

Es ist ebenso möglich, den Verbrennungsmotor mit einer Mehrzahl von Schiebenockensystemen 11 für eine Mehrzahl von Zylinder auszustatten. Umso geringer die Außentemperatur und/oder die Motortemperatur des Verbrennungsmotors ist, desto mehr Schiebenockensysteme 11 können im Startvorgang das entsprechende erste Auslassventil 20 mit dem entsprechenden zweiten Nocken 34 betätigen.

Es ist auch denkbar, dass bei einer Mehrzahl von Schiebenockensystemen 11 eine erste Gruppe von Schiebenockensystemen 11 das entsprechende erste Auslassventil 20 mit dem entsprechenden zweiten Nocken 34 während des ersten Abschnitts S1 betätigt. Eine zweite Gruppe von Schiebenockensystemen 11 hingegen betätigt das entsprechende erste Auslassventil 20 mit dem entsprechenden ersten Nocken 32. Eine Zuordnung zu den Gruppen kann rollierend zwischen aufeinanderfolgenden Startvorgängen oder während eines einzigen Startvorgangs erfolgen. Damit kann ein Verschleiß unter den Schiebenockensystemen 11 vergleichmäßigt werden.

Das hierin offenbarte Verfahren kann vorzugsweise zum Starten des Verbrennungsmotors eines Nutzfahrzeugs und generell bei Großmotoren verwendet werden, da hier eine Zeitdauer des Startvorgangs vergleichsweise lang und ein Energieaufwand vergleichsweise groß sein kann.

Wie oben stehend erläutert ist, kann das Verfahren zum Starten des Verbrennungsmotors das Schiebenockensystem 11 verwenden. Insbesondere kann die Steuereinheit 27 die Aktoren 24 und 26 entsprechend dem hierin offenbarten Verfahren zum Starten des Verbrennungsmotors ansteuern. Allerdings kann das Verfahren auch ein anderes Schiebenockensystem verwenden, das eine Umschaltung zwischen einem ersten Nocken für einen Normalbetrieb und einem zweiten Nocken für einen Startvorgang (einen ersten Abschnitt des Startvorgangs) aufweist. Der zweite Nocken kann beispielsweise auch so ausgebildet sein, das er eigens für den ersten Abschnitt des Startvorgangs ausgebildet ist und beispielsweise das entsprechende Auslassventil vollständig offen hält oder zumindest während des Verdichtungstaktes und des Ausschubtaktes offen hält. Es ist auch möglich, dass ein anderes System verwendet wird, um während des ersten Abschnitts des Startvorgangs in den Motorbremsbetrieb (Motorstartbetrieb) zu schalten.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 10: Variabler Ventiltrieb
- 11: Schiebenockensystem
- 12: Nockenwelle
- 14: Nockenträger
- 16: Erste Übertragungsvorrichtung (erster Schlepphebel)
- 18: Zweite Übertragungsvorrichtung (zweiter Schlepphebel)
- 18A: Kontaktbereich
- 20: Erstes Auslassventil
- 22: Zweites Auslassventil
- 24: Erster Aktor
- 26: Zweiter Aktor
- 27: Steuereinheit
- 28: Erster Anschlag
- 30: Zweiter Anschlag
- 32: Erster Nocken
- 32A: Erhebung
- 34: Zweiter Nocken
- 34A-34C: Erhebungen
- 36: Dritter Nocken
- 38: Erster nockenfreier Abschnitt
- 40: Zweiter nockenfreier Abschnitt
- 42: Erste Eingriffsspur
- 44: Zweite Eingriffsspur
- 46: Arretierungsvorrichtung
- 48: Elastisches Element
- 50: Sperrkörper
- 52: Erste Ausnehmung
- 54: Zweite Ausnehmung

- A: Zylinderdruck
- B: Auslassventilsteuerkurve
- C: Einlassventilsteuerkurve
- D: Auslassventilsteuerkurve
- K1: Drehzahlverlauf nach Startvorgang wie hierin offenbart
- K2: Drehzahlverlauf nach herkömmlichem Startvorgang
- S1: Erster Abschnitt
- S2: Zweiter Abschnitt

## Patentansprüche

1. Verfahren zum Starten eines Verbrennungsmotors, aufweisend:
Initiieren eines Startvorgangs; und
Antreiben des Verbrennungsmotors durch einen Anlasser des Verbrennungsmotors zur Erhöhung einer Motordrehzahl während des Startvorgangs, mit:
a) Betätigen eines ersten Auslassventils (20) des Verbrennungsmotors in einem Motorbremsbetrieb oder Motorstartbetrieb während eines ersten Abschnitts (S1) des Startvorgangs, in dem das erste Auslassventil (20) im Verdichtungstakt und/oder im Ausschubtakt zur Kompression von Luft zunächst geschlossen gehalten und vor Erreichen eines oberen Totpunkts einer Kolbenbewegung zur Dekompression der verdichteten Luft geöffnet wird; und/oder
b) Umschalten einer Betätigung eines ersten Auslassventils (20) des Verbrennungsmotors mittels eines Schiebenockensystems (11) zwischen einem ersten Abschnitt (S1) des Startvorgangs und einem zweiten Abschnitt (S2) des Startvorgangs, der insbesondere zeitlich nach dem ersten Abschnitt (S1) liegt.

2. Verfahren nach Anspruch 1, wobei:
im ersten Abschnitt (S1) des Startvorgangs das erste Auslassventil (20) zum Öffnen oder Offenhalten im Verdichtungstakt und im Ausschubtakt betätigt wird; und/oder
in einem zweiten Abschnitt (S2) des Startvorgangs das erste Auslassventil (20) zum Öffnen im Ausschubtakt betätigt wird.

3. Verfahren nach Anspruch 1 oder Anspruch 2, wobei das Schiebenockensystem (11) einen ersten Nocken (32) für einen Normalbetrieb und einen zweiten Abschnitt (S2) des Startvorgangs des Verbrennungsmotors und einen zweiten Nocken (34) für den ersten Abschnitt (S1) des Startvorgangs aufweist, wobei das Schiebenockensystem (11) wahlweise den ersten Nocken (32) und ein erstes Auslassventil (20) des Verbrennungsmotors in Wirkverbindung setzt oder den zweiten Nocken (34) und das erste Auslassventil (20) in Wirkverbindung setzt, wobei
das erste Auslassventil (20) mittels des zweiten Nockens (34) während des ersten Abschnitts (S1) des Startvorgangs betätigt wird; und/oder
von dem zweiten Nocken (34) auf den ersten Nocken (32) durch das Schiebenockensystem (11) umgeschaltet wird; und/oder
das erste Auslassventil (20) mit dem ersten Nocken (32) während des zweiten Abschnitts (S2) des Startvorgangs betätigt wird.

4. Verfahren nach Anspruch 3, wobei das Schiebenockensystem (11) einen auf einer Nockenwelle (12) des Verbrennungsmotors drehfest und axial verschiebbar angeordneten Nockenträger (14) mit dem ersten Nocken (32) und den in einer Längsrichtung der Nockenwelle (12) versetzt angeordneten zweiten Nocken (34) aufweist.

5. Verfahren nach einem der vorherigen Ansprüche, wobei das Umschalten der Betätigung des ersten Auslassventils (20) und/oder das Umschalten von dem zweiten Nocken (34) auf den ersten Nocken (32) nach einer vorbestimmten Zeitdauer, bei Erreichen einer vorbestimmten Drehzahl des Verbrennungsmotors und/oder bei Erreichen eines vorbestimmten Drehmoments des Verbrennungsmotors durchgeführt wird.

6. Verfahren nach einem der Ansprüche 3 bis 5, wobei der zweite Nocken (34) so ausgebildet ist, dass :
das erste Auslassventil (20) zwischen 100° KW und 60° KW vor dem Erreichen des oberen Totpunkts öffnet; und/oder
das erste Auslassventil (20) nach dem Öffnen im Ausschubtakt im Bereich zwischen dem oberem Totpunkt und 30° KW nach dem oberen Totpunkt schließt; und/oder
das erste Auslassventil (20) nach dem Öffnen im Verdichtungstakt im Bereich zwischen dem unteren Totpunkt und 30° KW nach dem unteren Totpunkt schließt.

7. Verfahren nach einem der vorherigen Ansprüche, ferner aufweisend:
Erfassen einer Außentemperatur und/oder einer Motortemperatur des Verbrennungsmotors, und
wobei der Schritt des Betätigen des ersten Auslassventils (20) in dem Motorbremsbetrieb und/oder der Schritt des Umschaltens der Betätigung des ersten Auslassventils (20) mittels des Schiebenockensystems (11) durchgeführt wird, wenn:
die erfasste Außentemperatur kleiner oder gleich einer vorbestimmten Außenschwellwerttemperatur ist, und/oder
die erfasste Motortemperatur kleiner oder gleich einer vorbestimmten Motorschwellwerttemperatur ist.

8. Verfahren nach Anspruch 7, ferner aufweisend:
Betätigen des ersten Auslassventils (20) während des ersten Abschnitts (S1) des Startvorgangs wie im zweiten Abschnitt (S2) des Startvorgangs, wenn die erfasste Außentemperatur größer als die Außenschwellwerttemperatur und/oder die Motortemperatur größer als die Motorschwellwerttemperatur ist.

9. Verfahren nach einem der vorherigen Ansprüche, ferner aufweisend:
Zünden eines zündfähigen Gemischs in einer dem ersten Auslassventil (20) zugeordneten Verbrennungskammer des Verbrennungsmotors während des zweiten Abschnitts (S2) des Startvorgangs.

10. Verfahren nach einem Ansprüche 3 bis 9, ferner aufweisend:
Umschalten von dem ersten Nocken (32) auf den zweiten Nocken (34) vor dem ersten Abschnitt (S1) des Startvorgangs, insbesondere während eines Abschaltens des Verbrennungsmotors oder zu Beginn des Startvorgangs.

11. Verfahren nach einem der Ansprüche 3 bis 10, wobei der Verbrennungsmotor ein zweites Auslassventil (22) aufweist, das demselben Zylinder wie das erste Auslassventil (20) zugeordnet ist, und das Verfahren ferner aufweist:
Geschlossen-Halten des zweiten Auslassventils (22) mittels eines nockenfreien Abschnitts (38) des Schiebenockensystems (11) während des ersten Abschnitts (S1) des Startvorgangs;
Umschalten von dem nockenfreien Abschnitt (38) zu einem dritten Nocken (36) des Schiebenockensystems (11), der insbesondere wie der erste Nocken (32) ausgebildet ist; und
Betätigen des zweiten Auslassventils (22) mit dem dritten Nocken (36) zum Öffnen des zweiten Auslassventils (22) im Ausschubtakt während des zweiten Abschnitts (S2) des Startvorgangs.

12. Verfahren nach einem der Ansprüche 3 bis 11, wobei der Verbrennungsmotor eine erste Gruppe von Schiebenockensystemen (11) und eine zweite Gruppe von Schiebenockensystemen (11) aufweist, die erste Gruppe während des ersten Abschnitts (S1) des Startvorgangs das entsprechende erste Auslassventil (20) mittels des entsprechenden zweiten Nockens (34) betätigt und die zweite Gruppe während des ersten Abschnitts (S1) des Startvorgangs das entsprechende erste Auslassventil (20) mittels des entsprechenden ersten Nockens (32) betätigt, wobei die erste Gruppe und die zweite Gruppe jeweils mindestens ein Schiebenockensystem (11) umfassen.

13. Verfahren nach Anspruch 12, wobei:
eine Zuordnung der Schiebenockensysteme (11) zur ersten Gruppe und zweiten Gruppe rollierend, insbesondere rollierend zwischen aufeinanderfolgenden Startvorgängen, erfolgt; und/oder
eine Anzahl von Schiebenockensystemen (11) in der ersten Gruppe und/oder der zweiten Gruppe in Anhängigkeit von einer erfassten Motortemperatur des Verbrennungsmotors und/oder einer erfassten Außentemperatur bestimmt wird.

14. Variabler Ventiltrieb (10) für einen Verbrennungsmotor eines Kraftfahrzeugs, insbesondere Nutzfahrzeugs, aufweisend:
ein erstes Auslassventil (20);
eine Nockenwelle (12);
ein Schiebenockensystem (11) mit einem Nockenträger (14), der auf der Nockenwelle (12) drehfest und axial verschiebbar angeordnet ist und einen ersten Nocken (32) und einen zweiten Nocken (34) aufweist, wobei der erste Nocken (32) und der zweite Nocken (34) in einer Längsrichtung der Nockenwelle (12) versetzt angeordnet sind; und
eine Steuereinheit (27), die dazu ausgebildet ist, das Verfahren nach einem der vorherigen Ansprüche durchzuführen.

15. Kraftfahrzeug, insbesondere Nutzfahrzeug, mit einem variablen Ventiltrieb (10) nach Anspruch 14.
